# EUROPÄISCHE PATENTSCHRIFT

(11) **EP 3 899 296 B1**
(45) Veröffentlichungstag und Bekanntmachung des Hinweises auf die Patenterteilung: **25.05.2022**
(21) Anmeldenummer: 19832879.1
(22) Anmeldetag: 17.12.2019
(51) Int. Cl.: F16C 17/02

(54) **GASLAGER UND EIN VERFAHREN ZU DESSEN HERSTELLUNG**
GAS BEARING AND METHOD FOR PRODUCING SAME
PALIER À GAZ ET PROCÉDÉ SERVANT À SA FABRICATION

(30) Priorität: 18.12.2018 DE 102018132678
(43) Veröffentlichungstag der Anmeldung: 27.10.2021
(73) Patentinhaber: Technische Universität Darmstadt, 64289 Darmstadt (DE)
(72) Erfinder: SCHWEIZER, Bernhard, 64287 Darmstadt (DE); BAUER, Marcel, 64289 Darmstadt (DE); MAHNER, Marcel, 61231 Bad Nauheim (DE); RIEKEN, Markus, 64293 Darmstadt (DE); ZEISE, Pascal, 64283 Darmstadt (DE)
(74) Vertreter: LifeTech IP Spies & Behrndt Patentanwälte PartG mbB
(86) Internationale Anmeldenummer: PCT/EP2019/085685
(87) Internationale Veröffentlichungsnummer: WO 2020/127290

(56) Entgegenhaltungen:
- EP-A1- 0 068 387
- EP-A1- 2 706 245
- EP-A1- 2 759 724
- DE-A1-102016 211 298
- JP-U- S6 037 623
- SU-A1- 709 857

## Beschreibung

Die vorliegende Erfindung bezieht sich auf ein Gaslager (insbesondere ein Luftlager) und ein Verfahren zur Herstellung des Gaslagers und insbesondere auf eine aerodynamische Rotorlagerung mittels (vorgespannter) Gleitfolien.

### HINTERGRUND

Luftlager oder allgemein Gaslager werden für hochdrehende Rotoren (bis zu 180.000 Umdrehungen in der Minute) verwendet, um die Reibung zu minimieren. Eine Lagerung für derart hohe Drehzahlen ist nur über Luftlager möglich, wobei die mitdrehende Luft ein Polster bildet, auf dem die Rotoren gehalten werden.

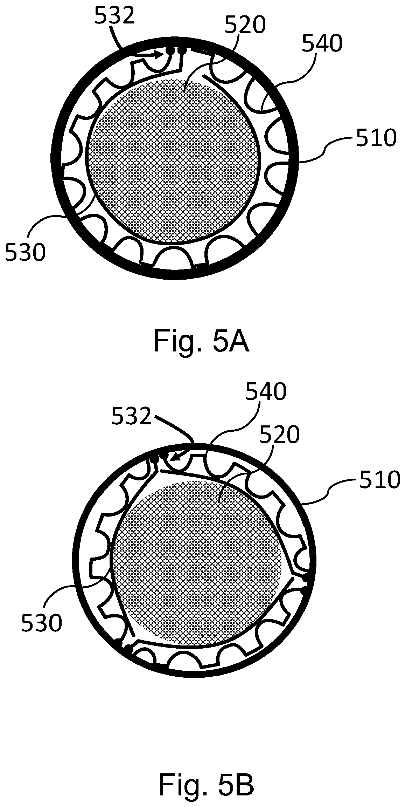

**Fig. 5A** und **5B** zeigen konventionelle Luftlager, die ein Gehäuse 510, einen Rotor 520, zumindest eine sogenannte Top-Folie 530 und zumindest eine Bump-Folie 540 aufweisen. Die Top-Folie 530 kann beispielsweise als ein einziges Element, wie es in der Fig. 5A dargestellt ist, ausgebildet sein. Es ist ebenfalls möglich, dass die Top-Folie 530 mehrere Top-Folien umfasst, wie sie beispielsweise in der Fig. 5B dargestellt sind, die dann aneinander angrenzend (entlang der Winkelbewegung des Rotors 520) angeordnet sind. Die Top-Folie(n) 530 können beispielsweise über Befestigungselemente 532 an dem Gehäuse 510 befestigt werden und der gegenüberliegende Abschnitt ist freischwebend zwischen dem Rotor 510 und der Bump-Folie 540 angeordnet. Die Bump-Folien 540 dienen der Abfederung des Rotors 520 für radiale Stöße. Sie werden daher als Stoßdämpfer oder Bumper genutzt, um den Rotor 520 möglichst mittig in der Öffnung des Gehäuses 510 zu halten.

Bei einer Drehung mit sehr hohen Drehzahlen (mehreren 10.000 U/min) des Rotors 520 kommt es dazu, dass die mitgeführte Luft ein Luftspalt oder Luftpolster zwischen dem Rotor 520 und der Top-Folie 530 bildet, so dass der Rotor 520 schwebend mittig gehalten wird. Die Drehung des Rotors 520 führt somit zu einem Abheben des Rotors 520 von der Top-Folie 530 und dadurch zu einer deutlichen Verringerung des Reibungswiderstandes, da nach dem Abheben nur noch die Luftreibung vorhanden ist. Die Top-Folie(n) 520 und die Bump-Folie(n) 540 dienen als Halt für einen nichtdrehenden Rotor 520 oder, wie gesagt, als Dämpfer beim Auftreten von unerwarteten radialen Stößen.

EP 0 068 387 A1 offenbart ein konventionelles Gaslager für einen drehbaren Körper gemäß dem Oberbegriff des Anspruchs 1, der durch Stützfolie und eine Gleitfolie gehalten wird. DE 10 2016 211 298 A1 und EP 2 706 245 A1 offenbaren weitere konventionelle Luftlageranordnungen gemäß dem Oberbegriff des Anspruchs 3, die ebenfalls eine Stützfolie und ein Gleitfolie aufweisen. EP 2 706 245 A1 offenbart ein weiteres radiales Gaslager, bei welchem ebenfalls eine Bump-Folie zwischen dem Gehäuse und einer Gleitfolie ausgebildet ist.

Ein Nachteil dieser konventionellen Luftlagerungen besteht darin, dass die Fertigung und die Montage aufwendig ist und daher zusätzliche Kosten erfordert. Außerdem weisen diese Luftlagerungen eine schlechte Berechenbarkeit auf, da viele Kontaktpaare für die Bauteile vorhanden sind, die sich nicht genau oder nur schwer definieren lassen.

Somit besteht ein Bedarf nach weiteren Lösungen, die einfacher und kostengünstiger herstellbar sind, trotzdem aber eine vergleichbare Abstützung bereitstellen, wie dies bei konventionellen Luftlagern der Fall ist.

### KURZBESCHREIBUNG DER ERFINDUNG

Zumindest ein Teil dieser Probleme wird durch ein Luftlager nach Anspruch 1 und ein Verfahren zur Herstellung nach Anspruch 10 gelöst. Die abhängigen Ansprüche beziehen sich auf vorteilhafte Weiterbildungen der Gegenstände der unabhängigen Ansprüche.

Ausführungsbeispiele beziehen sich auf ein Gaslager zur berührungsfreien Lagerung eines drehbaren Elements. Das Gaslager umfasst ein Gehäuse mit einer Öffnung zur Aufnahme des drehbaren Elements und zumindest zwei Gleitfolien. Die Gleitfolien sind überlappungsfrei an einer Innenseite der Öffnung angeordnet und weisen jeweils einen ersten Endabschnitt und einen zweiten Endabschnitt zur Abstützung an dem Gehäuse auf. Die Gleitfolien sind ausgebildet, um das drehbare Element nur durch den ersten und zweiten Endabschnitt gegenüber dem Gehäuse radial abzustützen, wobei der zweite Endabschnitt einen Reibkontakt mit der Innenseite bereitstellt und der erste Endabschnitt am Gehäuse befestigt ist, und wobei das drehbare Element die Gleitfolien zwischen dem ersten Endabschnitt und dem zweiten Endabschnitt kontaktiert.

Im Rahmen der vorliegenden Erfindung soll der Begriff "drehbares Element" breit ausgelegt werden und insbesondere einen Rotor, eine Welle, einen Lagerzapfen oder irgendein anderes sich drehendes Element umfassen. Radiale Stöße des drehbaren Elements sind dabei derart definiert, dass eine von außen einwirkende Kraft oder Vibrationen dazu führen, dass eine Kraft senkrecht zur Drehachse des drehbaren Elements wirkt (d.h. senkrecht zur axialen Achse des drehbaren Elements). Das drehbare Element kann durch jede Gleitfolie zumindest teilweise gegenüber solchen radialen Stößen abgestützt werden. Unter einem Gaslager soll insobesondere ein Luftlager verstanden werden, auch wenn die Erfindung nicht auf Luft eingeschränkt sein soll und andere gasförmige Medien umfassen kann.

Die Richtungen sind wie folgt definiert: Die Axialrichtung ist parallel zu Drehachse des drehbaren Elements, die Radialrichtung zeigt in der Querschnittsansicht senkrecht zur Drehachse radial weg von der Drehachse. Die Tangentialrichtung steht senkrecht auf der Axialrichtung und der Radialrichtung.

Die Gleitfolien sind entlang der Tangentialrichtung nacheinander zwischen dem drehbaren Element und dem Gehäuse angeordnet, wobei sie aneinander anstoßen können. Die Endabschnitte stellen somit die Bereiche an den beiden Rändern in der Tangentialrichtung dar, wobei der zweite Endabschnitt relativ zu dem Gehäuse bewegbar ist, wenn die Reibkraft überwunden wird.

Die Funktionsweise des Luftlagers ist zwar schon mit zwei Gleitfolien möglich, jedoch ist es besonders vorteilhaft, wenn mehr als zwei Gleitfolien vorhanden sind. Beispielsweise wird eine mittige Zentrierung des drehbaren Elements durch drei oder vier Gleitfolien erreicht. Die Anzahl der Gleitfolien soll jedoch nicht beschränkt sein. Das drehbare Element kann beispielsweise in einem Bereich zwischen den Endabschnitten durch die Gleitfolien gehalten werden.

Optional ist zumindest eine der Gleitfolien mehrlagig ausgebildet, wobei die einzelnen Lagen an einer gleichen Seite mit dem Gehäuse befestigt sind. Die einzelnen Lagen können sich somit bei radialen Stößen des drehbaren Elements gemeinsam verbiegen bzw. gegenseitig halten.

Ausführungsbeispiele beziehen sich auch auf ein Luftlager zur berührungsfreien Lagerung eines drehbaren Elements mit einem Gehäuse mit einer Öffnung zur Aufnahme des drehbaren Elements und einer Vielzahl von mehrlagige Gleitfolien. In dieser Ausführungsform ist jede mehrlagige Gleitfolie überlappungsfrei zu einer benachbarten mehrlagigen Gleitfolie an einer Innenseite der Öffnung angeordnet, wobei die einzelnen Lagen der mehrlagigen Gleitfolien alle mit einem ersten Endabschnitt an dem Gehäuse befestigt sind und der gegenüberliegende zweite Endabschnitt einen Reibkontakt mit einer anderen Lage der mehrlagigen Gleitfolie oder mit dem Gehäuse bildet. Außerdem bildet jede Lage der mehrlagigen Gleitfolien entlang einer dem drehbaren Element zugewandten Oberfläche in einem radialen Schnitt ein Kreissegment oder ein kreisförmiges Segment oder einen Bogen.

Die Vielzahl der mehrlagigen Gleitfolien kann insbesondere übereinanderliegend angeordnet sein, wobei eine maximale Abstützkraft gegenüber dem Gehäuse durch die ersten und zweiten Endabschnitte aufzubringen ist (da mittig keine weiteren Stützen vorhanden sind).

Um eine möglichst effektive Abstützung zu erreichen, kann eine Reibungszahl (Reibungskoeffizient) des Reibkontaktes durch zumindest eines der folgenden Merkmale erhöht werden:
- Beschichtung des zweiten Endabschnittes und/oder der Innenseite der Öffnung mit einem Material, das die Reibungszahl erhöht;
- der zweite Endabschnitt und/oder die Innenseite der Öffnung weist eine erhöhte Rauheit aufweist;
- der zweite Endabschnitt weist eine Kontur auf, um eine Reibung zu der Innenseite der Öffnung zu erhöhen;
- der zweite Endabschnitt ist in einer radialen Querschnittsansicht (entlang der Tangentialrichtung) abgewinkelt, um einen vergrößerten Kontaktwinkel für den Reibkontakt relativ zu der Innenseite der Öffnung zu bilden.

Die bestimmten Konturen am Ende der Gleitfolien können z.B. Rundungen, Schlitze, Ecken, Zähne, Spitzen etc. umfassen.

Es ist ebenfalls möglich, dass die Öffnung in dem Gehäuse von einer Kreisform abweicht, um im Vergleich zur Kreisform den Kontaktwinkel zu der Innenseite zu vergrößern.

Ein vergrößerter Kontaktwinkel hat den Effekt, dass die Vertikalkomponente der Kraft (die senkrecht auf das Gehäuse bzw. die Innenseite wirkt) sich ebenfalls vergrößert, was wiederum zu einer höheren Reibungskraft und Reibarbeit führt.

Um die Steifigkeit von zumindest einer Gleitfolie zu erhöhen, kann optional eine Dicke der zumindest einen Gleitfolie (oder einer Lage) zwischen dem ersten Endabschnitt und dem zweiten Endabschnitt variieren. Dadurch wird der abstützende Effekt für radial wirkende Kräfte erhöht.

Optional umfasst die Befestigung des ersten Endabschnittes an dem Gehäuse zumindest eine der folgenden Verbindungen: eine Lötverbindung, eine Schweißverbindung, eine Klebeverbindung, ein zumindest teilweises Einsetzen des ersten Endabschnittes in eine Ausnehmung des Gehäuses.

Ausführungsbeispiele beziehen sich auch auf eine Rotoraufhängung mit einem Luftlager, wie es zuvor beschrieben wurde, und einem drehbaren Element, das in die Öffnung des Gehäuses einsetzbar ist, sodass die Gleitfolien zwischen dem drehbaren Element und dem Gehäuse angeordnet sind, um radial auf das drehbare Element wirkende Kräfte relativ zu dem Gehäuse abzustützen und mit steigenden Drehzahlen ein Luftpolster zu bilden.

Optional sind die zumindest zwei Gleitfolien auswechselbar, um die zumindest zwei Gleitfolien in Bezug auf ihre Steifigkeit und in Abhängigkeit von dem drehbaren Element und den zu erwartenden radialen Stößen zu wählen. Mit dieser Auswahl soll sichergestellt werden, dass das drehbare Element zuverlässig mittig in der Öffnung des Gehäuses gehalten wird und gleichzeitig während der Drehbewegung (mit einer gewünschten Drehzahl) ein Luftspalt zwischen den zumindest zwei Gleitfolien und dem drehbaren Element entsteht. Die wechselbaren Gleitfolien können beispielsweise in Nuten oder Vertiefungen im Gehäuse eingesetzt werden.

Ausführungsbeispiele beziehen sich auch auf ein Verfahren zum Herstellen eines Luftlagers zur berührungsfreien Lagerung eines drehbaren Elements. Das Verfahren umfasst:
- Bereitstellen eines Gehäuses mit einer Öffnung zur Aufnahme eines drehbaren Elements;
- Anordnen von zumindest zwei nicht wellenförmigen Gleitfolien, die sich bogenförmig ein- oder mehrlagig zwischen einem ersten Endabschnitt und einem zweiten Endabschnitt der Glleitfolien an einer Innenseite der Öffnung erstrecken, ohne dass benachbarte Gleitfolien überlappen, wobei relativ zum Gehäuse ein erster Endabschnitt jeder Lage tangential unbeweglich ist und ein zweiter Endabschnitt jeder Lage einen Reibkontakt mit dem Gehäuse oder anderen Lage einer mehrlagigen Gleitfolie bereitstellt; und
- Einsetzen des drehbaren Elements in die Öffnung, so dass die zumindest zwei Gleitfolien zwischen dem drehbaren Element und dem Gehäuse angeordnet sind, wobei das drehbare Element die Gleitfolien zwischen dem ersten Endabschnitt der Gleitfolien und dem zweiten Endabschnitt der Gleitfolien kontaktiert.

Das drehbare Element braucht wiederum nur über den ersten Endabschnitt und den zweiten Endabschnitt gegenüber dem Gehäuse radial abgestützt werden. Das Abknicken der Gleitfolien bzw. die optimierte Geometrie des Gehäuses führt dazu, dass der Auftreffwinkel der Gleitfolien auf die Innenseite sich erhöht und somit die Kraftwirkung verstärkt senkrecht auf die Innenseite wirkt. Dadurch kann die Reibkraft und somit die Abstützkraft erhöht werden. Außerdem kann damit der Reibweg eingestellt werden.

Optional umfasst das Anordnen der Gleitfolien ein festes Anbringen der Gleitfolien an dem Gehäuse oder ein Ausbilden einer lösbaren Verbindung zu dem Gehäuse.

Gemäß weiteren Ausführungsformen sind die Gleitfolien unter einer Vorspannung zwischen dem drehbaren Element und dem Gehäuse angeordnet. Über die gewählte Vorspannung ist es ebenfalls möglich, die Abstützkraft des Luftlagers einzustellen.

Es ist ebenfalls möglich, dass die Steifigkeit oder die Vorspannung der einzelnen Gleitfolien nicht homogen für alle Gleitfolien gleich gewählt wird, sondern beispielsweise in einer vertikal unten gelegenen Folie (oder bestimmte Lagen von mehrlagigen Gleitfolien) eine höhere Steifigkeit vorgesehen wird. Dies kann beispielsweise dann sinnvoll sein, wenn bestimmte radiale Stöße oder radiale Kräfte in einer bestimmten Richtung zu erwarten sind, so dass in dieser Richtung die Gleitfolien eine besonders hohe Steifigkeit aufweisen. Optional ist es jedoch ebenfalls möglich, dass alle Gleitfolien identisch ausgebildet sind und nur in unterschiedlichen Winkelbereichen innerhalb der Öffnung angeordnet sind.

### KURZBESCHREIBUNG DER FIGUREN

Die Ausführungsbeispiele der vorliegenden Erfindung werden besser verstanden anhand der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt ein Luftlager gemäß einem Ausführungsbeispiel der vorliegenden Erfindung.
- Fig. 2A-2D: zeigen Ausführungsbeispiele der vorliegenden Erfindung, die über eine Anpassung des Reibkontaktes eine gewünschte Stabilität gegenüber radialen Stößen des drehbaren Elements relativ zu dem Gehäuse erreichen.
- Fig. 3A-3C: zeigen weitere Ausführungsbeispiele für die genutzten Gleitfolien.
- Fig. 4A-4D: zeigen Ausführungsformen für eine Befestigung des ersten Endabschnittes der ein- oder mehrlagigen Gleitfolien an dem Gehäuse.

### DETAILLIERTE BESCHREIBUNG

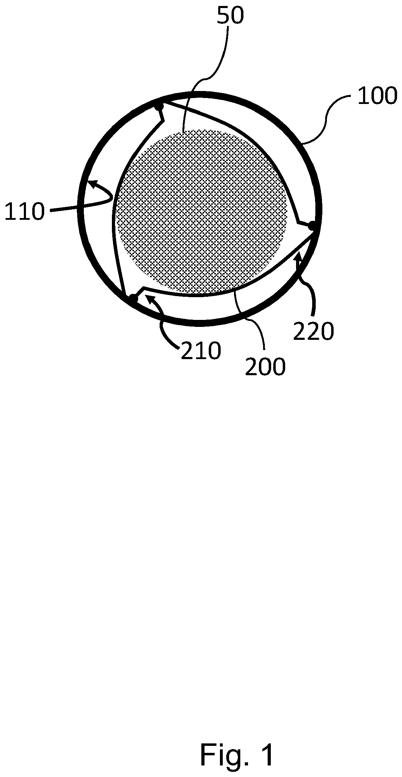

**Fig. 1** zeigt ein Luftlager zur berührungsfreien Lagerung eines drehbaren Elements (insbesondere einen hochdrehenden Rotor) gemäß einem Ausführungsbeispiel der vorliegenden Erfindung. Das Luftlager umfasst ein Gehäuse 100 mit einer Öffnung zur Aufnahme des drehbaren Elements 50 und zumindest zwei Gleitfolien 200 (besser drei oder vier), die überlappungsfrei in Tangentialrichtung an einer Innenseite 110 der Öffnung angeordnet sind. Die Gleitfolien 200 sind bogenförmig (nicht wellenförmig) geformt und umfassen jeweils einen ersten Endabschnitt 210 und einen zweiten Endabschnitt 220 zur Abstützung an dem Gehäuse 100. Die Gleitfolien 200 sind dabei ausgebildet, um das drehbaren Element 50 nur durch den ersten Endabschnitt 210 und den zweiten Endabschnitt 220 gegenüber dem Gehäuse 100 radial abzustützen, wobei das drehbare Element 50 die Gleitfolie 200 beispielsweise zwischen dem ersten Endabschnitt 210 und dem zweiten Endabschnitt 220 kontaktiert.

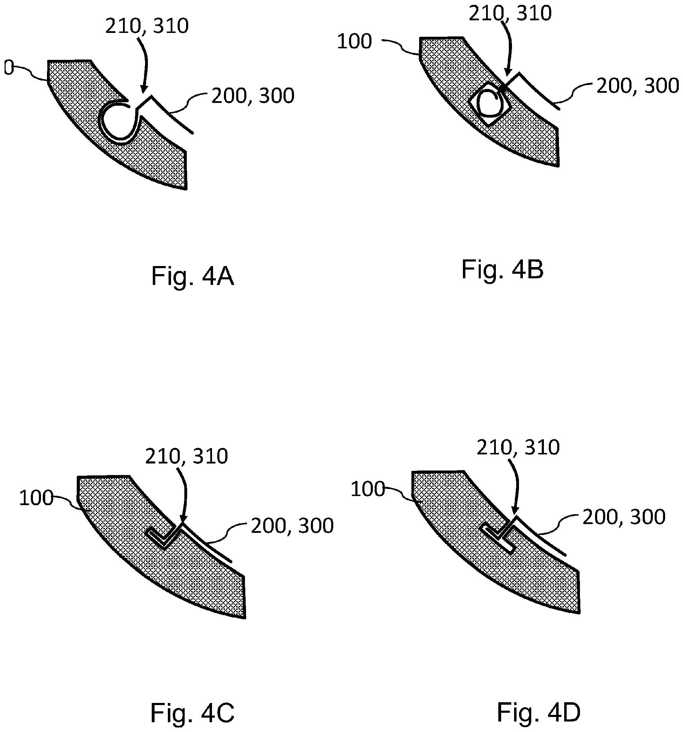

Der zweite Endabschnitt 220 stellt einen Reibkontakt mit der Innenseite 110 der Öffnung bereit und ist somit relativ zu dem Gehäuse bewegbar. Der erste Endabschnitt 210 kann mit dem Gehäuse 100 fest verbunden sein, bzw. in einem formschlüssigen Kontakt mit dem Gehäuse 100 stehen (z.B. in eine Nut oder Vertiefung in dem Gehäuse eingreifen, siehe unten Fig. 4A und 4B, komplexere Befestigungen, z.B. L-förmig oder T-förmig, sind auch denkbar, siehe unten Fig. 4C und 4D), so dass eine relative Bewegung entlang der Innenseite 110 nicht möglich ist.

Es versteht sich, dass, solange das drehbare Element 50 noch nicht relativ zu dem Gehäuse 100 rotiert, das drehbare Element 50 mit zumindest einer Gleitfolie 200 (oder mit allen) in Kontakt steht. Mit zunehmender Drehgeschwindigkeit 50 wird jedoch Luft zwischen den Gleitfolien 200 und dem drehbaren Element 50 mitgeführt, so dass die Gleitfolien 200 von dem drehbaren Element 50 weggedrückt werden und ein Luftpolster zwischen den Gleitfolien 200 und dem drehbaren Element 50 entsteht. Durch die Haftung der Luft an dem drehbaren Element 50 entsteht somit bei sehr hohen Drehzahlen ein Luftfilm oder Luftpolster, sodass das drehbare Element 50 von den Gleitfolien 200 abhebt. Typischerweise tritt dieser Effekt erst bei mehreren 10.000 U/min oder mehr als 100.000 U/min auf. Diese Luftlager können beispielsweise für Drehungen von bis zu 200.000 U/min genutzt werden.

Um einen sichere Dämpfungsschutz für Stöße oder radialen Bewegungen des drehbaren Elements bereitzustellen, sind die Eigenschaften der Gleitfolien 200 wie beispielsweise eine Vorspannung oder Geometrien oder die Kopplung ans Gehäuse 100 wichtig und sind entsprechend der Anwendung einzustellen.

Im Folgenden werden verschiedene Maßnahmen beschrieben, die in Ausführungsbeispiele umgesetzt werden können, um den gewünschten Dämpfungsschutz zu erreichen.

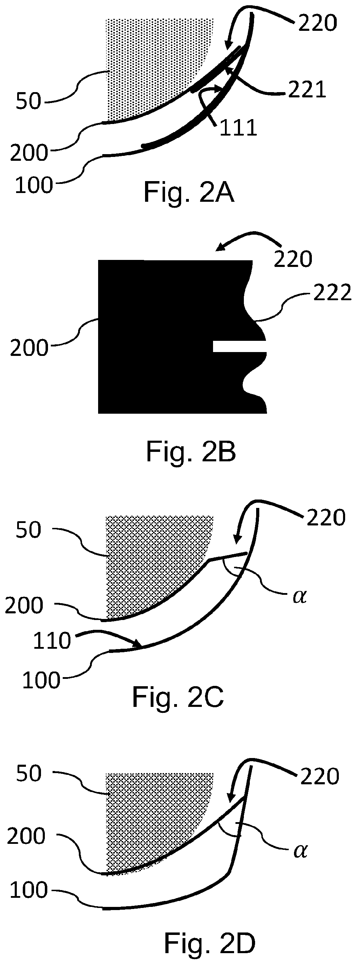

**Fig. 2A** bis **2D** zeigen Ausführungsbeispiele der vorliegenden Erfindung, die über eine Anpassung des Reibkontaktes eine gewünschte Stabilität gegenüber radialen Stößen des drehbaren Elements 50 relativ zu dem Gehäuse 100 erreichen. Eine hohe Reibungszahl zwischen der Gleitfolie 200 und dem Gehäuse 100 führt beispielsweise dazu, dass die Gleitfolien 200 radiale Stöße besser dämpfen können, da bei höheren Reibungen die Gleitfolien 200 sich nur schwer relativ zu dem Gehäuse 100 bewegen lassen.

In der **Fig. 2A** ist ein Ausführungsbeispiel gezeigt, bei dem der zweite Endabschnitt 220 beispielsweise eine Beschichtung 221 aufweist, die dazu führt, dass die Reibungszahl zu dem Gehäuse 100 vergrößert wird. Ebenso ist es möglich, dass die Innenseite 110 des Gehäuses eine Beschichtung 111 aufweist, die die Reibungszahl zwischen der Gleitfolie 200 und dem Gehäuse 100 erhöht. Die beiden Beschichtungen 221, 111 können ebenfalls aneinander angepasst sein, um so eine möglichst hohe Reibung oder eine angepasste zu erreichen. Der gleiche Effekt kann erreicht werden, wenn in dem Bereich der Beschichtungen 111, 221 eine erhöhte Rauheit der Oberfläche ausgebildet wird.

**Fig. 2B** zeigt ein Ausführungsbeispiel für die Gleitfolien 200, bei dem die zweiten Endabschnitte 220 eine Oberflächenstruktur/Kontur 222 aufweist, die so angepasst ist, dass die Reibung zwischen der Gleitfolie 200 und der Innenseite 110 sich erhöht. Die Oberflächenstruktur 222 kann beispielsweise wellenförmige Abschnitte, Einschnitte, zahnförmige Vorsprünge oder andere Strukturen aufweisen, die zu einer Erhöhung der Reibung führt. Es ist ebenfalls möglich, dass die Gleitfolie 200 entsprechend dünn ausgebildet ist, so dass sich am Ende eine scharfe Kante bildet, die zu einem hohen Anpressdruck und somit zu einer hohen Reibung führt.

**Fig. 2C** zeigt ein Ausführungsbeispiel der vorliegenden Erfindung, bei dem der zweite Endabschnitt 220 im Vergleich zu dem verbleibenden Teil der Gleitfolie 200 abgewinkelt ist. Dies führt dazu, dass das Ende der Gleitfolie 200 einen größeren Kontaktwinkel α mit der Innenseite 110 bildet. Je größer der Kontaktwinkel α ist, umso größer ist die Kraftkomponente, die bei einem radialen Stoß senkrecht auf die Innenseite 110 wirkt. Über den Kontaktwinkel kann auch der Reibweg eingestellt werden. Für die Reibungskraft ist die vertikale Kraftkomponente relevant, sodass über eine angepasste Abschrägung des zweiten Endabschnittes 220 die Reibungskraft einstellbar ist.

Die **Fig. 2D** zeigt ein weiteres Ausführungsbeispiel für das Luftlager, bei dem die Öffnung in dem Gehäuse 100 nicht kreisförmig ausgebildet ist - auch wenn das drehbare Element 50 immer noch einen kreisförmigen Querschnitt hat. Gemäß diesem Ausführungsbeispiel wird die Öffnung im Gehäuse 100 derart geändert, dass der Schnittwinkel α zwischen dem zweiten Endabschnitt 220 und der Innenseite 110 größer wird oder auf einen gewünschten Wert eingestellt wird, um die Reibungskraft (bzw. die dafür wesentliche Kraftkomponente) oder den Reibweg im Vergleich zu einer kreisförmigen Öffnung zu ändern, insbesondere zu erhöhen.

Somit können die Ausführungsbeispiele aus den Fig. 2A bis 2D für eine Anpassung (insbesondere Vergrößerung) der Reibungszahl genutzt werden.

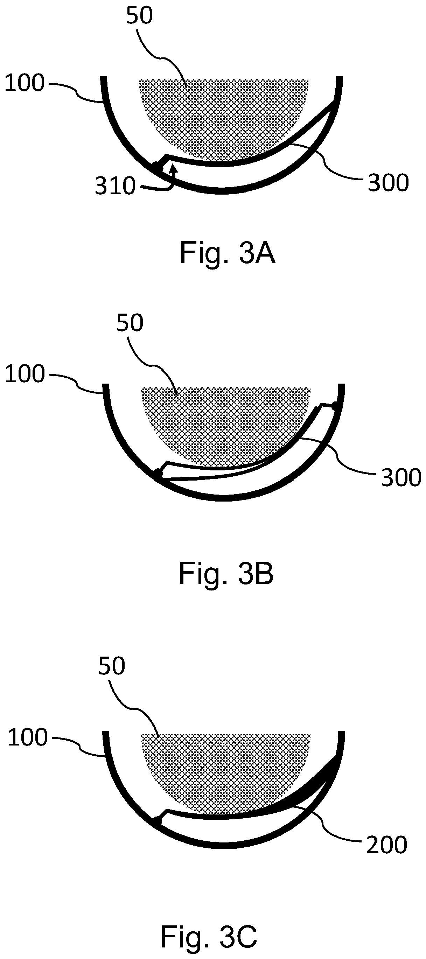

Die **Fig. 3A** bis **3C** zeigen weitere Ausführungsbeispiele für die genutzten Gleitfolien 200, 300, die ebenfalls genutzt werden können, um radiale Stöße besser abfangen zu können.

Das Ausführungsbeispiel der **Fig. 3A** nutzt dazu Gleitfolien 300, die mehrere Lagen aufweisen, wobei alle Lagen der Gleitfolie 300 übereinander angeordnet sind und bespielhaft auf einer gleichen Seite mit dem Gehäuse 100 fixiert sind, d.h. die ersten Endabschnitte 310 der Lagen liegen entlang der Tangentialrichtung alle auf der gleichen Seite.

In der **Fig. 3B** ist ein Ausführungsbeispiel gezeigt, bei dem zumindest eine der Gleitfolien 300 mehrere Lagen aufweist, wobei die einzelnen Lagen hier auf gegenüberliegenden Seiten mit dem Gehäuse 100 fest verbunden sind. Beispielhaft sind zwei Lagen gezeigt. Es können aber auch mehr als zwei Lagen sein, die beliebig (z.B. alternierend) auf der einen oder der anderen Seite (in Bezug auf die Tangentialrichtung) an dem Gehäuse befestigt sind. Die Reibung zwischen den Lagen kann wiederum über Beschichtung und/oder eine Oberflächenrauheit angepasst werden.

Die **Fig. 3C** zeigt ein Ausführungsbeispiel der vorliegenden Erfindung, bei dem zumindest eine Gleitfolie 200, 300 (einlagig oder mehrlagig) eine variable Dicke aufweist, um so die radialen Stöße des drehbaren Elements 50 besser abfedern zu können, und zwar ohne dass die Gleitfolie 200, 300 mit der Innenseite 110 in einem Bereich zwischen den Endabschnitten in Kontakt gerät.

Es wurden hier jeweils nur eine Gleitfolie 200, 300 gezeigt. Die anderen Gleitfolien wurden der Einfachheit halber weggelassen. Sie können in der gleichen Art ausgebildet sein. Kombinationen der verschiedenen Gleitfolien 200, 300 sind ebenfalls möglich.

Außerdem können bei diesen Ausführungsbeispielen die ersten Endabschnitte 210, 310 mit dem Gehäuse 100 beispielsweise über einen Schweißkontakt, Klebkontakt, Lötkontakt verbunden sein. Es ist ebenso möglich, die ersten Endabschnitte 210, 310 in entsprechende Nute in das Gehäuse zu schieben oder Niet- oder Schraubverbindungen als Befestigung zu nutzen.

**Fig. 4A** bis **4D** zeigen Ausführungsformen für eine Befestigung des ersten Endabschnittes 210, 310 der ein- oder mehrlagigen Gleitfolien 200, 300 an dem Gehäuse 100. In den gezeigten Ausführungsbeispielen greifen die ersten Endabschnitte 210, 310 der Gleitfolien 200, 300 in entsprechenden Ausnehmungen, Nuten oder Vertiefungen des Gehäuses 100 ein, um so einen festen Halt der Gleitfolien 200, 300 (oder deren Lagen) an dem Gehäuse zu erreichen.

Hierbei gibt es verschiedene Möglichkeiten, um die Ausnehmung in dem Gehäuse 100 zu bilden. Zum Beispiel ist es möglich, dass eine kreisförmige Ausnehmung gebildet wird, wie sie in der **Fig. 4A** zu sehen ist. Optional kann auch eine quadratische oder viereckige Form gewählt werden, wie sie in der **Fig. 4B** gezeigt ist. Fig. 4C zeigt eine Ausführungsform mit einem L-förmigen Eingriff und Fig. 4D zeigt ein Beispiel für einen T-förmigen Eingriff in das Gehäuse 100. Für beide Ausführungsbeispiele kann die Gleitfolie 200, 300 in Axialrichtung in die Ausnehmung eingeschoben werden. Nach dem Einschieben kann die Gleitfolie 200, 300 entsprechend fixiert werden (z.B. über eine Arretierung). Diese Ausnehmungen bieten den Vorteil, dass die Gleitfolien 200, 300 leicht gewechselt werden können, sodass die Gleitfolien 200, 300 entsprechend den Anforderungen gezielt ausgewählt werden können.

Vorteile von Ausführungsbeispiele der vorliegenden Erfindung können wie folgt zusammengefasst werden:
- Bump-Folien, wie sie bei konventionellen Luftlagern eingesetzt werden, können weggelassen werden. Stattdessen werden ein- oder mehrlagigen Folien 200, 300 genutzt. Die Fertigung wird dadurch einfacher und Kosten werden gespart.
- Die Lagerfunktion wird allein durch eine modifizierte Gleitfolie 200, 300 gewährleistet, wobei die Modifizierung durch eine effektiv erhöhte Steifigkeit der Folien erreicht wird.
- Ebenso können die Folien 200, 300 vorgespannt sein und somit in die entsprechende Öffnung des Gehäuses hineingedrückt werden. Dadurch können größere radiale Stöße abgefangen werden.

- Eine Dämpfung von radialen Bewegungen kann durch eine Anpassung der Reibung zwischen der Folie 200, 300 und dem Gehäuse 100 erreicht werden.
- Durch ein definiertes Zusammenspiel der Einzelkomponenten ergibt sich eine bessere Berechenbarkeit.

Die in der Beschreibung, den Ansprüchen und den Figuren offenbarten Merkmale der Erfindung können sowohl einzeln als auch in beliebiger Kombination im Rahmen der Ansprüche für die Verwirklichung der Erfindung wesentlich sein.

### BEZUGSZEICHENLISTE

- 50, 520: drehbares Element/Rotor
- 100: Gehäuse mit Öffnung
- 110: Innenseite der Öffnung
- 111, 221: Beschichtungen
- 200,300: Gleitfolien (einlagig oder mehrlagig)
- 210,310: erster Endabschnitt der Gleitfolien oder ihrer Lagen
- 220,320: zweiter Endabschnitt der Gleitfolien oder ihrer Lagen
- 222: Randkonturen der Endabschnitte
- 510: konventionelles Gehäuse
- 530: konventionelle Top-Folien
- 540: konventionelle Bump-Folien
- 532: Folienbefestigung
- α: Auftreffwinkel des zweiten Endabschnitts auf das Gehäuse

## Patentansprüche

1. Gaslager zur berührungsfreien Lagerung eines drehbaren Elements (50), mit folgenden Merkmalen:
ein Gehäuse (100) mit einer Öffnung zur Aufnahme des drehbaren Elements; und
zumindest zwei Gleitfolien (200), die überlappungsfrei an einer Innenseite (110) der Öffnung angeordnet sind und die jeweils einen ersten Endabschnitt (210) und einen zweiten Endabschnitt (220) zur Abstützung an dem Gehäuse (100) aufweisen,
**dadurch gekennzeichnet, dass**
die Gleitfolien (200) ausgebildet sind, um das drehbare Element nur durch den ersten und zweiten Endabschnitt (210, 220) gegenüber dem Gehäuse (100) radial abzustützen, wobei der zweite Endabschnitt (220) einen Reibkontakt mit der Innenseite (110) bereitstellt und der erste Endabschnitt (210) am Gehäuse befestigt ist,
und wobei das drehbare Element (50) die Gleitfolien (200) zwischen dem
ersten Endabschnitt (210) und dem zweiten Endabschnitt (220) kontaktiert.

2. Gaslager nach Anspruch 1, bei dem zumindest eine der Gleitfolien (200) mehrlagig ausgebildet ist und die einzelnen Lagen an einer gleichen Seite mit dem Gehäuse (100) befestigt sind.

3. Gaslager zur berührungsfreien Lagerung eines drehbaren Elements (50), mit folgenden Merkmalen:
einem Gehäuse (100) mit einer Öffnung zur Aufnahme des drehbaren Elements; und
eine Vielzahl von mehrlagigen Gleitfolien (300), wobei jede mehrlagige Gleitfolie überlappungsfrei zu einer benachbarten mehrlagigen Gleitfolie an einer Innenseite (110) der Öffnung angeordnet ist und die einzelnen Lagen der mehrlagigen Gleitfolien (300) alle mit einem ersten Endabschnitt (310) an dem Gehäuse (100) befestigt sind und der gegenüberliegende zweite Endabschnitt (320) einen Reibkontakt mit einer anderen Lage der mehrlagigen Gleitfolie (300) oder mit dem Gehäuse (100) bildet, und
**dadurch gekennzeichnet, dass**
jede Lage der mehrlagigen Gleitfolien (300) entlang einer dem drehbaren Element (50) zugewandten Oberfläche in einem radialen Schnitt ein kreisförmiges Segment bildet.

4. Gaslager nach einem der vorhergehenden Ansprüche, wobei zur Erhöhung einer Reibungszahl und/oder Reibarbeit des Reibkontaktes zumindest eines der folgenden Merkmale ausgebildet ist:
- Beschichtung (111, 221) des zweiten Endabschnittes (220; 320) und/oder der Innenseite (110) der Öffnung mit einem Material, das die Reibungszahl erhöht;
- der zweite Endabschnitt (220; 320) und/oder die Innenseite (110) der Öffnung weist eine erhöhte Rauheitauf;
- der zweite Endabschnitt (220; 320) weist eine Kontur (222) auf;
- der zweite Endabschnitt (220; 320) ist in einer radialen Querschnittsansicht abgewinkelt, um einen vergrößerten Kontaktwinkel (α) für den Reibkontakt relativ zu der Innenseite (110) der Öffnung zu bilden.

5. Gaslager nach einem der vorhergehenden Ansprüche, wobei die Öffnung in dem Gehäuse (100) von einer Kreisform abweicht, um im Vergleich zur Kreisform einen Kontaktwinkel (α) des zweiten Endabschnittes (220, 320) zu der Innenseite (110) zu vergrößern.

6. Gaslager nach einem der vorhergehenden Ansprüche, wobei zur Erhöhung der Steifigkeit von zumindest einer Gleitfolie (200; 300) eine Dicke der Gleitfolie (200; 300) zwischen dem ersten Endabschnitt (210; 310) und dem zweiten Endabschnitt (220; 320) variiert, um den abstützenden Effekt für radial wirkende Kräfte zu erhöhen.

7. Gaslager nach einem der vorhergehenden Ansprüche, wobei die Befestigung des ersten Endabschnittes (210; 310) an dem Gehäuse (100) zumindest eine der folgenden Verbindungen umfasst: eine Lötverbindung, eine Schweißverbindung, eine Klebeverbindung, ein zumindest teilweises Einsetzen des ersten Endabschnittes (210; 310) in eine Ausnehmung des Gehäuses.

8. Rotoraufhängung mit:
einem Gaslager nach einem der vorhergehenden Ansprüche; und
einem drehbaren Element (50), das in die Öffnung des Gehäuses (100) derart einsetzbar ist, dass die Gleitfolien (200; 300) zwischen dem drehbaren Element (50) und dem Gehäuse (100) angeordnet sind, um radial auf das drehbare Element (50) wirkende Kräfte relativ zu dem Gehäuse (100) abzustützen und mit steigenden Drehzahlen ein Luftpolster zu bilden.

9. Rotoraufhängung nach Anspruch 8, wobei die zumindest zwei Gleitfolien (200; 300) auswechselbar sind, um die zumindest zwei Gleitfolien (200; 300) in Bezug auf ihre Steifigkeit und in Abhängigkeit von dem drehbaren Element (50) und den zu erwartenden radialen Stößen zu wählen.

10. Verfahren zum Herstellen eines Gaslager zur berührungsfreien Lagerung eines drehbaren Elements, mit folgenden Schritten.
Bereitstellen eines Gehäuses (100) mit einer Öffnung zur Aufnahme eines drehbaren Elements (50);
Anordnen von zumindest zwei nicht-wellenförmig geformten Gleitfolien (200; 300), die sich bogenförmig ein- oder mehrlagig zwischen einem ersten Endabschnitt (210; 310) und einem zweiten Endabschnitt (220; 320) der Gleitfolien an einer Innenseite (110) der Öffnung erstrecken, ohne dass benachbarte Gleitfolien (200; 300) überlappen, wobei relativ zum Gehäuse (100) ein erster Endabschnitt (210; 310) jeder Lage tangential unbeweglich ist und ein zweiter Endabschnitt (220; 320) jeder Lage einen Reibkontakt mit dem Gehäuse (100) oder anderen Lage einer mehrlagigen Gleitfolie (300) bereitstellt; und
Einsetzen des drehbaren Elements (50) in die Öffnung, so dass die zumindest zwei Gleitfolien (200; 300) zwischen dem drehbaren Element (50) und dem Gehäuse (100) angeordnet sind,
und wobei das drehbare Element (50) die Gleitfolien (200) zwischen dem ersten Endabschnitt (210) und dem zweiten Endabschnitt (220) der Gleitfolien kontaktiert.

11. Verfahren nach Anspruch 10, wobei das Anordnen der Gleitfolien (200; 300) ein festes Anbringen der Gleitfolien (200; 300) an dem Gehäuse oder ein Ausbilden einer lösbaren Verbindung zu dem Gehäuse (100) umfasst.

## Claims

1. Gas bearing for contact-free mounting of a rotatable element (50), comprising the following features:
a housing (100) having an opening for receiving the rotatable element; and
at least two sliding films (200) which are arranged without overlap on an interior (110) of the opening and which each have a first end portion (210) and a second end portion (220) for support on the housing (100),
**characterized in that**
the sliding films (200) are designed to radially support the rotatable element relative to the housing (100) only by means of the first and second end portions (210, 220), the second end portion (220) providing frictional contact with the interior (110) and the first end portion (210) being attached to the housing,
and the rotatable element (50) contacting the sliding films (200) between the first end portion (210) and the second end portion (220).

2. Gas bearing according to claim 1, wherein at least one of the sliding films (200) is formed in multiple layers and the individual layers are attached to the housing (100) on the same side.

3. Gas bearing for contact-free mounting of a rotatable element (50), comprising the following features:
a housing (100) having an opening for receiving the rotatable element; and
a plurality of multi-layer sliding films (300), each multi-layer sliding film being arranged on an interior (110) of the opening without overlapping with an adjacent multi-layer sliding film, and the individual layers of the multi-layer sliding films (300) all being attached to the housing (100) with a first end portion (310), and the opposite second end portion (320) forming frictional contact with another layer of the multi-layer sliding film (300) or with the housing (100), and
**characterized in that**
each layer of the multi-layer sliding films (300) forms a circular segment in a radial portion along a surface facing the rotatable element (50).

4. Gas bearing according to any of the preceding claims, wherein at least one of the following features is designed to increase a coefficient of friction and/or friction work of the friction contact:
- coating (111, 221) the second end portion (220; 320) and/or the interior (110) of the opening with a material that increases the coefficient of friction;
- the second end portion (220; 320) and/or the interior (110) of the opening has an increased roughness;
- the second end portion (220; 320) has a contour (222);
- the second end portion (220; 320) is angled in a radial cross-sectional view in order to form an increased contact angle (α) for frictional contact relative to the interior (110) of the opening.

5. Gas bearing according to any of the preceding claims, wherein the opening in the housing (100) deviates from a circular shape in order to increase a contact angle (α) of the second end portion (220, 320) with respect to the interior (110).

6. Gas bearing according to any of the preceding claims, wherein, to increase the rigidity of at least one sliding film (200; 300), a thickness of the sliding film (200; 300) varies between the first end portion (210; 310) and the second end portion (220; 320) in order to increase the supporting effect for radially acting forces.

7. Gas bearing according to any of the preceding claims, wherein the attachment of the first end portion (210; 310) to the housing (100) comprises at least one of the following connections: a soldered connection, a welded connection, an adhesive connection, and an at least partial insertion of the first end portion (210; 310) into a recess in the housing.

8. Rotor suspension comprising:
a gas bearing according to any of the preceding claims; and
a rotatable element (50) which can be inserted into the opening of the housing (100) such that the sliding films (200; 300) are arranged between the rotatable element (50) and the housing (100), in order to support forces acting radially on the rotatable element (50) relative to the housing (100) and to form an air cushion with increasing speeds.

9. Rotor suspension according to claim 8, wherein the at least two sliding films (200; 300) can be exchanged in order to select the at least two sliding films (200; 300) with regard to their stiffness and depending on the rotatable element (50) and the radial impacts to be expected.

10. Method for producing a gas bearing for contact-free mounting of a rotatable element, comprising the following steps:
providing a housing (100) having an opening for receiving a rotatable element (50);
arranging at least two non-wave-shaped sliding films (200; 300) which extend in an arcuate manner in one or more layers between a first end portion (210; 310) and a second end portion (220; 320) of the sliding films on an interior (110) of the opening without adjacent sliding films (200; 300) overlapping, wherein a first end portion (210; 310) of each layer is tangentially immovable relative to the housing (100) and a second end portion (220; 320) of each layer provides frictional contact with the housing (100) or another layer of a multi-layer sliding film (300); and
inserting the rotatable element (50) into the opening, such that the at least two sliding films (200; 300) are arranged between the rotatable element (50) and the housing (100), and wherein the rotatable element (50) contacts the sliding films (200) between the first end portion (210) and the second end portion (220) of the sliding films.

11. Method according to claim 10, wherein the arrangement of the sliding films (200; 300) comprises fixedly attaching the sliding films (200; 300) to the housing or forming a detachable connection to the housing (100).

## Revendications

1. Palier à gaz pour le montage sans contact d'un élément rotatif (50), comportant les caractéristiques suivantes :
un boîtier (100) comportant une ouverture permettant de recevoir l'élément rotatif ; et
au moins deux feuilles de glissement (200) qui sont disposées sans se chevaucher sur une face intérieure (110) de l'ouverture et qui présentent respectivement une première section d'extrémité (210) et une seconde section d'extrémité (220) permettant le support sur le boîtier (100),
**caractérisé en ce que**
les feuilles de glissement (200) sont conçues pour supporter radialement l'élément rotatif par rapport au boîtier (100) uniquement à travers les première et seconde sections d'extrémité (210, 220), la seconde section d'extrémité (220) fournissant un contact par frottement avec la face intérieure (110) et la première section d'extrémité (210) étant fixée au boîtier,
et l'élément rotatif (50) venant en contact avec les feuilles de glissement (200) entre la première section d'extrémité (210) et la seconde section d'extrémité (220).

2. Palier à gaz selon la revendication 1, au moins l'une des feuilles de glissement (200) étant réalisée en plusieurs couches et les couches individuelles étant fixées au boîtier (100) sur une même face.

3. Palier à gaz pour le montage sans contact d'un élément rotatif (50), comportant les caractéristiques suivantes :
un boîtier (100) comportant une ouverture permettant de recevoir l'élément rotatif ; et
une pluralité de feuilles de glissement (300) à plusieurs couches, chaque feuille de glissement à plusieurs couches étant disposée adjacente à une feuille de glissement à plusieurs couches sans se chevaucher sur une face intérieure (110) de l'ouverture et les couches individuelles des feuilles de glissement (300) à plusieurs couches étant toutes fixées au boîtier (100) avec une première section d'extrémité (310) et la seconde section d'extrémité (320) opposée formant un contact par frottement avec une autre couche de la feuille de glissement (300) à plusieurs couches ou avec le boîtier (100), et
**caractérisé en ce que**
chaque couche des feuilles de glissement (300) à plusieurs couches forme un segment circulaire dans une section radiale le long d'une surface faisant face à l'élément rotatif (50).

4. Palier à gaz selon l'une des revendications précédentes, au moins l'une des caractéristiques suivantes étant conçue pour augmenter un coefficient de frottement et/ou un travail de frottement du contact par frottement :
- la seconde section d'extrémité (220 ; 320) et/ou la face intérieure (110) de l'ouverture sont revêtues (111, 221) d'un matériau augmentant le coefficient de frottement ;
- la seconde section d'extrémité (220 ; 320) et/ou la face intérieure (110) de l'ouverture présente une rugosité accrue ;
- la seconde section d'extrémité (220 ; 320) présente un contour (222) ;
- la seconde section d'extrémité (220 ; 320) est inclinée dans une vue en section transversale radiale pour fournir un angle de contact (α) accru pour le contact par frottement par rapport à la face intérieure (110) de l'ouverture.

5. Palier à gaz selon l'une des revendications précédentes, l'ouverture dans le boîtier (100) s'écartant d'une forme circulaire afin d'accroître un angle de contact (α) de la seconde section d'extrémité (220, 320) vers la face intérieure (110) par rapport à la forme circulaire.

6. Palier à gaz selon l'une des revendications précédentes, pour augmenter la rigidité d'au moins une feuille de glissement (200 ; 300), une épaisseur de la feuille de glissement (200 ; 300) variant entre la première section d'extrémité (210 ; 310) et la seconde section d'extrémité (220 ; 320) afin d'augmenter l'effet de support pour des forces agissant radialement.

7. Palier à gaz selon l'une des revendications précédentes, la fixation de la première section d'extrémité (210 ; 310) au boîtier (100) comprenant : une liaison par brasure, et/ou une liaison par soudure, et/ou une liaison par adhésif, et/ou une insertion au moins partielle de la première section d'extrémité (210 ; 310) dans un évidement du boîtier.

8. Suspension de rotor comportant :
un palier à gaz selon l'une des revendications précédentes ; et
un élément rotatif (50) qui peut être inséré dans l'ouverture du boîtier (100) de telle sorte que les feuilles de glissement (200 ; 300) sont disposées entre l'élément rotatif (50) et le boîtier (100) afin de supporter des forces agissant radialement sur l'élément rotatif (50) par rapport au boîtier (100) et de former un coussin d'air avec des vitesses de rotation croissantes.

9. Suspension de rotor selon la revendication 8, les au moins deux feuilles de glissement (200 ; 300) étant interchangeables afin de choisir les au moins deux feuilles de glissement (200 ; 300) en ce qui concerne leur rigidité et en fonction de l'élément rotatif (50) et des chocs radiaux attendus.

10. Procédé de fabrication d'un palier à gaz pour le montage sans contact d'un élément rotatif, comportant les étapes suivantes :
fourniture d'un boîtier (100) comportant une ouverture permettant de recevoir un élément rotatif (50) ;
disposition d'au moins deux feuilles de glissement (200 ; 300) de forme non ondulée qui s'étendent en forme d'arc en une ou plusieurs couches entre une première section d'extrémité (210 ; 310) et une seconde section d'extrémité (220 ; 320) des feuilles de glissement sur une face intérieure (110) de
l'ouverture, sans que des feuilles de glissement (200 ; 300) adjacentes ne se chevauchent, une première section d'extrémité (210 ; 310) de chaque couche étant tangentiellement immobile et une seconde section d'extrémité (220 ; 320) de chaque couche fournissant un contact par frottement avec le boîtier (100) ou avec une autre couche d'une feuille de glissement (300) à plusieurs couches, par rapport au boîtier (100) ; et
insertion de l'élément rotatif (50) dans l'ouverture de sorte que les au moins deux feuilles de glissement (200 ; 300) sont disposées entre l'élément rotatif (50) et le boîtier (100), et l'élément rotatif (50) venant en contact avec les feuilles de glissement (200) entre la première section d'extrémité (210) et la seconde section d'extrémité (220) des feuilles de glissement.

11. Procédé selon la revendication 10, la disposition des feuilles de glissement (200 ; 300) comprenant une fixation solide des feuilles de glissement (200 ; 300) au boîtier ou la formation d'une liaison amovible au boîtier (100).
